(19)

Europäisches
Patentamt
European
Patent Office
Office européen
des brevets

(11) **EP 2 192 543 A1**

(12) **EUROPEAN PATENT APPLICATION**

(43) Date of publication:
**02.06.2010 Bulletin 2010/22**

(51) Int Cl.:
*G06Q 90/00* *(2006.01)*

(21) Application number: **09177258.2**

(22) Date of filing: **26.11.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **26.11.2008 EP 08425756** | (71) Applicant: **Business-E S.p.A.**<br>**48124 Ravenna (IT)**<br><br>(72) Inventor: **Farina, Giovanni Andrea**<br>**48121 Ravenna (IT)**<br><br>(74) Representative: **Regnault de la Mothe, Hélène**<br>**Roncuzzi & Associati S.r.l.**<br>**Via Antica Zecca, 6**<br>**48121 Ravenna (IT)** |

(54) **Protection method**

(57)    A method for managing the security of given information, which can be accessed and processed, in use, by at least one respective user, said method comprising a phase of identifying at least one given information to be secured followed by a phase of quantifying a current security level for each identified given information 10; the phase of quantifying a current security level for each given information comprises a phase of automatically calculating, through a processing group, a risk coefficient (R) for each given information.

EP 2 192 543 A1

**Description**

The present invention relates to a method for protecting given information. More in particular the present invention relates to a method, which can be used to protect confidential business information. In more detail, the present invention relates to a method for protecting confidential information, which can be archiving both in digital and analogical format.

BACKGROUND TO THE INVENTION

As it is well known, confidential business information has an ever increasing value, both strategic and tactical, in business management, and therefore they represent intangible assets of the respective companies. For this reason, the procedures for protecting confidential information and sensitive data of a company have been increasingly important inside the operations of companies and firms. In fact, it is well known that confidential business information, presenting an economic value, can be stolen or subjected to industrial espionage, but also to accidental and undesired alterations due for example to carelessness or lack of preparation of the personnel responsible for managing this information. Furthermore, it should be noted that the current habit of digitalise the business documents to transmit and archive the respective information in an electronic format has made this information more accessible and, therefore, they can be stolen or altered in a more easy manner.

Therefore, the use is well known of software for protecting business information and data accessible through the information infrastructures of the company, for example accessible through a local network (LAN) that enables the transfer of data contained in digital files both to a plurality of PCs (clients) and to at least one printer, which can telematically transfer, as the case may be, these data also outside the perimeter of the company's network. These software for protecting information, such as for example "Total Protection for Data" of the firm McAfee™ or "Digital Guardian" of the firm Verdasys™, usually allow monitoring in real time the transmission of data and information inside the company's infrastructures, so as to signal any attempt to transfer confidential information outside the company. In addition to this, these software allow assigning to each user of the company IT resources a given authorisation degree for processing confidential information, so that each of these users can access, copy or, as the case may be, modify only given information, for which he/she is responsible. In this way it is possible to prevent from accessing confidential information the users that are not authorized due to their function or their position within the company organisation.

It should be however noted that the flow of information during the common business operation transcends the transmission of information through the IT infrastructures; for example, confidential paper documents can be left in the out tray of a network printer or a shared printer, and therefore available to everyone, even for a long time before being picked up by the user, who has launched printing. Similarly, in the common company habit, it is well known to send confidential digital documents to suppliers and customers, thus loosing the ability to monitor each subsequent transmission of this information. Therefore, the protection of business confidential information and sensitive data, which can be obtained through a specific data protection software, is neither complete nor satisfactory, as these softwares allow intervening only in transmission and processing of information performed through the company IT structures.

In view of the above description, it would be desirable to have available a method for managing information security, which allows to protect these information against any improper and/or undesired processing or theft, so as to preserve the integrity and the confidentiality thereof. In particular, it would be desirable to have available a method for managing the information security that allows to evaluate in a simple and quantitative manner the real level of security of each information to be protected, so as to allow a selective action on those information that do not respect an adequate security standard. In particular, it would be desirable to have available a method for managing information that, contrary to the prior art, allows to calculate in a substantially automatic and repeatable manner the real level of security of these information, taking into account not only the risks associated to the electronic processing of this information but also the risks associated to the processing of this information through tools different from that electronic.

SUMMARY OF THE PRESENT INVENTION

The present invention relates to a method for protecting given information. More in particular the present invention relates to a method, which can be used to protect confidential business information. In more detail, the present invention relates to a method for protecting confidential information, which can be archiving both in digital and analogical format.

An object of the present invention is to provide a method for managing information security; this method allows to solve the above illustrated drawbacks, and it is therefore suitable to satisfy a plurality of requirements that to date have still not been addressed and therefore suitable to represent a new and original source of economic interest, capable of modifying the current market of the business data protection software.

According to the present invention, an information managing method is provided, whose main characteristics will be described in at least one of the appended claims.

DETAILED DESCRIPTION OF THE PRESENT INVENTION

The present invention relates to a method for managing information security, aimed at achieving high security standards in processing this information, in order to prevent undesired operations, such as for example theft or accidental alteration of at least one part of the data forming this information.

In this regard, it should be specified that the information managed by the method according to the present invention can be of any type and they can be transmitted both in analogical and digital format. In particular, with reference, for example, to an ordinary business, the information in question can be indifferently archived and/or transmitted through paper documents, but also by means of sound video recording, or by means of digital supports such as for example magnetic disks, optical disks, mass storages (*Hard disk,* USB memory pens or *memory sticks*). In principle, also the subject of conversations represents information, and it can be protected by means of the managing method according to the present invention.

At this point it should be specified that any type of information, to be used in a profitable manner, above all in the company sector, shall be filed, so as it can be accessible by the users that need it, and it must be subjected to processing operations or processes, which can involve alteration of this information. Therefore, processing of information is a complex and dynamic process, and requires that the information are filed, found, transmitted, exchanged and/or processed in a very easily manner. Moreover, the strategic, and therefore economic, value associated with confidential information and sensitive data, above all in the company sector, requires that, with this ease of information processing, a high standard of security is assured.

At this point it should be noted that, hereunder, the term "security" or "protection of information" will mean indistinctly a plurality of operative modes to be followed in the processing of information so as to guarantee:

- confidentiality of the information, i.e. to allow accessing the information only to users, who must process or use this information;
- integrity of information, i.e. completeness and accurateness of information; and
- traceability of information, i.e. monitoring, preferably in real time, each transmission and/or exchange of this information.

It should be furthermore clarify that hereunder the generic term "user" will be used to indicate each operator, who has access to respective information and who can therefore perform on this information at least one given treatment. In particular, the term user has a general value, and it can be used indifferently to indicate a human operator, for example an employee responsible for sorting or filing documents, or an operator of other type, for example an artificial intelligence or a pre-programmed software, which can has the need to access a given information to perform respective duties inside an industrial or, more generically, a business activity. In this regards, it should be noted that the method for managing the security of the information according to the present invention can be applied to any type of operating organisation, for example a given company comprising internal users (employee, unpaid trainers, etcetera) and provided with respective external users (collaborators, customers, suppliers, partners, etcetera). This method comprises first of all a phase of identifying given information, which one desires to secure through. This given information is usually confidential information presenting a commercial and/or strategic, and therefore economic, value for the company, or sensitive data regarding the personnel or the collaborators, that a company must know and protect according to the requirements of the laws on protection of personal data in force. For example, this given information can comprise information of financial or tax nature of the company, of the databases of customers and suppliers, personal details, information about type of contract and remuneration of the employees, etcetera.

At this point, a phase occurs of quantifying the actual security level associate to each of this given information that one desires to secure. In particular, hereunder "security level" will indicate a generic parameter, whose value, preferably a numerical value, represents and allows to evaluate the real conditions of security associated to a respective information. In other words, the security level of a given information allows to quantify the probability that this information is maintained in a respective status of integrity and confidentiality following access and processing by respective users.

In more detail, it should be noted that, for the present method, the numerical value of the level of security of each given information can be indifferently associated to this respective given information according to a direct scale, wherein to higher values of the security level correspond more effective security conditions, or according to an inverse scale, wherein a high security level of a given information indicates a condition of high risk that this information is altered or shared with persons that must not access it. Therefore, without however limiting the generality of the present invention, hereinafter reference will be made to a direct scale associating high values of the security level of a given information to high standards of security and confidentiality for this given information.

At this point, it should be noted that the phase of quantifying a current security level of each given information comprises first of all a phase of identifying for each given information the current value of some parameters describing the operations of data processing to which each of these given information is or can be usually subjected. In particular these parameters are the following:

- D is the number of occurrences of the given information, i.e. the number of distinct names or representations that this given information can assume;
- U is the total number of users accessing the given information;
- S is the total number of distinct displaying or storage devices in which the given information is or can be stored or presented;
- M is the total number of threats to which the information is subjected, wherein the term "threat" means each specific circumstance or operative condition or processing operations performed on the data forming the given information, which presents a potential risk of violating the security of this given information.

To better clarify the meaning of these parameters, it can be useful to make reference to the following example, wherein as given information to be protected has been identified a sensitive data represented by the salary of an employee. In this case, the information can be indicated in different ways, according to the company context to which reference is made: for example, it can be represented as net salary on the pay roll, but also as gross salary in an employment agreement. Therefore, in this case, the given information will present two distinct occurrences and therefore the parameter D will present value 2. Again with reference to this example, during the common practice of companies, this given information can be accessed by the HR manager, an administrative officer and the secretary giving the payrolls to the employees. Therefore the given information will be usually processed by three distinct users, and therefore the parameter U will present value 3. It should be furthermore noted that the given information relating to the salary of the employee of the example can be recorded on the computer of one of the three above mentioned users, in the archive of the company and it can be furthermore shown on the monitor on it can be printed. Therefore the given information can be reproduced in four different storages/displaying devices, and therefore the parameter S will present value 4. Lastly, again with reference to this example, it is possible to indicate that the given information will be subjected to the following five threats accidental modification by a user, sending through e-mail (i.e. an unprotected transmission), printing on a network printer (therefore accessible also for users not authorized to access the given information), modification by a malicious software and erasure due to a hardware failure. Therefore the parameter M will present an overall value of 5, equal to the identified threats.

The phase of identifying for each given information the value of the above listed parameters can comprise or can be followed by a phase of entering data, or data entry phase, wherein the following data are input into a relevant software executed by a respective device for processing data, for example a PC:

- list of the given information to be protected;
  and for each single given information:
- number of the occurrence of this given information (value parameter D);
- number or list of the users accessing this given information (value parameter U)
- number or list of the storage or displaying devices reporting this given information (value parameter S);
- number or list of the threats to which this information is subjected (value parameter M).

At this point it should be noted that entering data relating to the users, to the storage/displaying device and to the threats can be performed by inserting directly the value of the respective parameters U, S, and M, or by selecting elements inside pre-programmed lists, in which for example all the possible users of the company are listed, or all the storage/displaying means of the company or all the threats, to which a given business information can be subjected.

At this point, the phase of quantifying a security level for each given information comprises a phase of calculating a risk coefficient R associated to this given information. This phase is preferably performed in a substantially automatic manner through the computing device and the respective above mentioned software, which calculates a numerical value for each risk coefficient R, which, preferably although without limitation, will be the greater, the higher the risk of a loss in integrity or confidentiality of the given information. In other words, the risk coefficient R associated to a given information (*InfDet*) quantifies the probability of a violation of the security of this given information.

The automatic calculation of the risk coefficient associated with a given information is preferably carried out by the computing device, by applying a mathematic model which can be synthesised in the following formula F:

$$R(InfDet) = \frac{D^{aD} U^{aU} S^{aS}}{(D+U+S) \times 10} \times M^{aM} \tag{F}$$

wherein:

$R$ is the risk coefficient of the given information indicated with *InfDet*;

D, U, S and M are the parameters illustrated above in detail;

*aD, aU, aS* and *aM* are exponents, whose value is chosen to associate a given statistical weight to the parameters D, U, S, and M inside the formula F.

In particular, without however limiting the scope of protection of the present invention, it is possible to apply efficiently the present managing method for managing information, by using a version F' of the formula F, wherein the exponents *aD*, *aU* and *aS* assume respectively value 1, 2, 3, and 1. Therefore, F' will be expressed by the formula

$$R(InfDet) = \frac{DU^2S^3}{10 \times (D+U+S)} \times M \tag{F'}$$

and, with reference to the above illustrated example, the risk coefficient R associated to the information relating the salary of an employee will present a value equal to 64.

At this point, the phase of quantifying a current security level for each given information comprises a phase of calculating this current security level, which can be performed by the computing device and by the respective software, by carrying out a numerical comparison of the risk coefficient R associated to each given information and a respective critical value RC of risk, which quantifies, according to a scale of values common with the risk coefficient R, the maximum acceptable risk for the given information in question. In particular, for each given information the computing device will give a current value for the respective security level. In more detail, this security level can have only two discrete values, for example "secure" and "insecure" in the case in which the calculated risk coefficient R is respectively lower or greater than the risk critical value RC. Alternatively, to the security level of a given information a continuous value can be associated, the greater the higher the security of this information. An example of this value is the difference between the critical value RC of risk and the respective risk coefficient R previously calculated; in this case to negative current values of security given information will correspond, that are not subjected to adequate standard of data security and protection. For example, again with reference to the case of a given information relating to the salary of an employee, this information which presents a risk coefficient equal to 64 can be deemed "secure" relative to a risk critical value equal to 100, but it will be "insecure" if it is deemed adequate that this given information cannot present a risk critical value greater than, for example, 30 or 50.

In this regard it should be noted that the risk critical values RC can be fixed and pre-programmed or they can be modified substantially at will by the person applying the method in question, so that the evaluation of the real security of data can be adapted to the real needs.

Similarly, the critical values RC of risk can be identical for each given information or they can vary as the case may be according to the type or the category of the given information, whose security must be evaluated. In this second way it is possible to evaluate the overall level of security of a system of given information by requiring a minimum level of security different for each information category. For example, it will be possible to require a greater security level for the financial or trade information relative to the information regarding the personal details of employees or collaborators.

At this point, the method for managing the security of information according to the present invention comprises a phase of applying measures to increase the security level of that information that present a current value of the respective security level deemed inadequate or unsatisfactory. These measures must be identified as the case may be, and they can comprise, for example, the change of the access rights or of the method of processing of the users as regards respective given information, or the use of prior art security software to control in real time the access and the transmission of given information in electronic/digital format.

At this point it should be noted that, once the phase has been performed of applying measures to increase the security level of at least one given information, the phase can be performed again of quantifying the current security level associated to this given information, so as to verify that the measures adopted have been effective. It is therefore possible to state that the method for managing the security of given information according to the present invention can comprise a cyclical and iterative execution of a phase of quantifying the security level associated to a given information, and of a phase of applying measures to increase the security level of this given information. This cyclical execution is performed in a substantially iterative manner and it ends when the current value of the security level of the given information achieves a satisfactory value for the user applying the method.

Lastly, it is clearly apparent that the periodic application, for example every 6 months-1 year, of the method for managing the security of information according to the present invention allows to maintain continuously desired security levels for the given information to be protected.

In this regard again, it could be useful to note that it is possible further to generalise the used mathematic model, by inserting statistical weights that enable different values to be assigned to the different threats or to the different users. This generalisation can be expressed by the formula F":

$$R(InfDet) = \frac{D^{adi}\left(\sum_i U_i\right)^{adi} S^{adi}}{(D + \sum_i U_i + S) \times 10} \times \left(\sum_j M_j\right)^{adi} \qquad (F'')$$

wherein, as the case may be, to each threat *Mj* and to each user *Ui* can be associated risk values different from each other, so that the calculation of the risk coefficient R associated to the given information *InfDet* can take into account statistically the different level of risk associated to different users or to different threats.

It should be noted that it is possible to use a further variant of the mathematic model illustrated above to calculate risk coefficient R', which, contrarily to the risk coefficients R, present a respective value which is statistically weighted to take into account the risks associated to all the given information to be secured.

These risk coefficients R' associated to each nth given information (*InfDetn*) belonging to a system comprising, for example, a given number N of given information to be protected, can be calculated through the respective formula F'''

$$R'(InfDet_n) = \frac{D_n^{adi}\left(\sum_i U_i\right)_n^{adi} S_n^{adi}}{10 \times \sum_i^N (D_j + \left(\sum_i U_i\right)_j + S_j) \times 10} \times \left(\sum_j M_j\right)_n^{adi} \qquad (F''')$$

wherein the parameters $\left(\sum_i U_i\right)_n$ $Sn$ represent respectively the occurrences, the users, statistically weighted, and the storage/displaying units relating to the nth given information (InfDetn), for which the respective risk coefficient R' must be calculated.

Clearly, also the formula F''' can be used in a respective simplified version $F^{IV}$

$$R'(InfDet_n) = \frac{D_n^{adi} U_n^{adi} S_n^{adi}}{10 \times \sum_i^N (D_j + \left(\sum_i U_i\right)_j + S_j) \times 10} \times M_n^{adi} \qquad (F^{IV})$$

wherein *Un* and *Mn* respectively indicate the overall number of users accessing *InfDetn* and the number of total threats to which this given information is associated.

The use, the scope and the effects of the managing method according to the present invention are clearly apparent from the description above and require no further explanations, however it could be useful to specify that the application of this method allows to make processes for managing information and sensitive data compatible with the requirements of the standards ISO9000, IS027001, and ISO 15408.

It should be furthermore specified that the most innovative aspect of the present method consists in the fact that the quantification of the security level of the different given information can be performed in a substantially automatic manner through an electronic computing device and a respective software. The use of this software, suitable to calculate the risk coefficient *R/R'* according to any one of the variants of the formula F, enables to calculate the security level of a given information in a simple manner, substantially within everybody's reach, and above all in a quantitative/deterministic and repeatable manner.

**Claims**

1. A method for managing the security of given information, which can be accessed and processed, in use, by at least one respective user; said method comprising a phase of identifying at least a said given information to be secured followed by a phase of quantifying a current security level for each said identified given information; **characterised in that** said phase of quantifying a current security level for each said given information comprises a phase of automatically calculating through processing means a risk coefficient (R)(R') for each said given information.

2. A method according to the previous claim, **characterised in that** said phase of calculating automatically a risk coefficient (R) (R') for each said information is preceded by a phase of entering data, during which in said processing means are entered at least one list of said identified given information and data relating to the processing methods for this given information.

3. A method according to claim 2, **characterised in that** said data relating the methods for processing said given information comprise for each said given information (InfDet)(InfDetn) at least one of the following data:

   - number of the occurrence of said given information (D);
   - list of the users accessing said given information (Ui);
   - number of the users accessing said given information (U);
   - list of the storage or displaying devices reporting said given information;
   - number of the storage or displaying devices reporting said given information (S);
   - list of the threats, to which said given information is subjected in use (Mj);
   - Number of the threats, to which said given information is subjected in use (M).

4. A method according to claim 3, **characterized in that** said phase of calculating a risk coefficient (R)(R') associated to each said given information comprises a phase of calculating through said processing means a function (F)(F') (F")(F'")(F$^{IV}$) of at least one of the following parameters:

   - number of the occurrence of said given information (D);
   - number of the users accessing said given information (U);
   - number of the storage or displaying devices reporting said given information (S);
   - Number of the threats, to which said given information is subjected in use (M).

5. A method according to claim 4, **characterised in that** said function (F) is mathematically expressed by means of the formula

$$R(InfDet) = \frac{D^{\alpha 1} U^{\alpha 2} S^{\alpha 3}}{(D+U+S) \times 10} \times M^{\alpha 4}.$$

6. A method according to claim 4, **characterised in that** said function (F") is mathematically expressed by means of the formula

$$R(InfDet) = \frac{D^{\alpha 1} U^{\alpha 2} S^{\alpha 3}}{(D+U+S) \times 10} \times M^{\alpha 4},$$

7. A method according to claim 4, **characterised in that** said function (F'") is mathematically expressed by means of the formula

$$R'(InfDet_n) = \frac{D_n^{aD}\left(\sum_i U_i\right)_n^{aU} S_n^{aS}}{10 \times \sum_i^N \left(D_i + \left(\sum_i U_i\right)_i + S_i\right) \times 10} \times \left(\sum_j M_j\right)_n^{aM} .$$

8. A method according to claim 4, **characterised in that** said function ($F^{IV}$) is mathematically expressed by means of the formula

$$R'(InfDet_n) = \frac{D_n^{aD} U_n^{aU} S_n^{aS}}{10 \times \sum_i^N \left(D_i + \left(\sum_i U_i\right)_i + S_i\right) \times 10} \times M_n^{aM} .$$

9. A method according to any one of claims 5 to 8,
   **characterised in that** the exponents $aD$, $aU$, $aS$ and aM present respectively value 1, 2, 3, and 1.

10. A method according to any one of claims 2 to 9,
    **characterised in that** said phase of quantifying the current security level for each said given information comprises at least one phase of comparing numerically thorough said computing means at least one said risk coefficient (R) (R') associated with a respective given information with a critical value (RC) of risk.

11. A method according to claim 10, **characterised in that** each said critical value (RC) of risk can be varied substantially at will through said processing means.

12. A method as claimed in any one of the previous claims,
    **characterised in that** said phase of quantifying a current security level for each said given information is followed by a phase of applying measures to increase the level of security of said given information which present an insufficient current value of the respective security level.

13. A method according to any one of claims 2-12,
    **characterised in that** said phase of entering data comprises at least one phase of selecting at least one said user ($Ui$) and/or at least one said threat ($Mj$) inside a respective pre-programmed list in said processing means.

14. A method as claimed in any one of the previous claims,
    **characterised in that** said processing means comprise an electronic device for processing data and a respective software programmed so as to perform said phase of entering data and each said phase of calculating automatically a risk coefficient (R)(R') for each said given information.

Europäisches
Patentamt

European
Patent Office

Office européen
des brevets

# EUROPEAN SEARCH REPORT

Application Number

EP 09 17 7258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525 ISSN: 0170-9291 * The claimed subject matter, with due regard to the description and drawings, relates to processes comprised in the list of subject matter and activities excluded from patentability under Art. 52(2) and (3) EPC. The applicant is advised that in accordance with the established practice of the EPO, no search need be performed in respect to those aspects of the claimed invention. The only identifiable technical aspects of the claimed invention relate to the use of conventional, general-purpose data processing technology for processing data of an inherently non-technical nature. The information technology employed is considered to have been generally known as it was widely to available to everyone at the date of filing/priority of the present application. The notoriety of such prior art cannot reasonably be contested. No documentary | 1-14 | INV. G06Q90/00 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 31 March 2010 | Falò, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                      

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 17 7258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | evidence was therefore considered required.; the whole document * ----- | | |

TECHNICAL FIELDS
SEARCHED        (IPC)

The present search report has been drawn up for all claims

| Place of search | Date of completion of the search | Examiner |
|---|---|---|
| Munich | 31 March 2010 | Falò, Luca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)